## Europäisches Patentamt
## European Patent Office
## Office européen des brevets

(19)

(11) Numéro de publication: **0 208 726**
**B 1**

(12) **FASCICULE DE BREVET EUROPEEN**

(45) Date de publication du fascicule du brevet: **07.11.90**

(51) Int. Cl.⁵: **B 32 B 3/12,** B 64 D 29/00, B 64 C 7/02, B 32 B 31/12

(21) Numéro de dépôt: **86900603.1**

(22) Date de dépôt: **08.01.86**

(86) Numéro de dépôt international:
**PCT/FR86/00003**

(87) Numéro de publication internationale:
**WO 86/04018 17.07.86 Gazette 86/17**

(54) **CAPOTS RESISTANT AU FEU, EN PARTICULIER POUR MOTEURS D'AVIONS.**

(30) Priorité: **09.01.85 FR 8500224**

(43) Date de publication de la demande:
**21.01.87 Bulletin 87/04**

(45) Mention de la délivrance du brevet:
**07.11.90 Bulletin 90/45**

(84) Etats contractants désignés:
**DE GB IT**

(56) Documents cités:
**EP-A-0 038 746**
**EP-A-0 056 713**
**EP-A-0 075 033**
**FR-A-2 338 137**
**US-A-3 703 422**
**US-A-4 016 022**

**See also references of WO8604018**

(73) Titulaire: **AVIONS MARCEL DASSAULT-BREGUET AVIATION**
**27, Rue du Professeur Victor Pauchet**
**F-92420 Vaucresson (FR)**

(72) Inventeur: **SOURDET, Claude**
**10, avenue Foch**
**F-64100 Bayonne (FR)**

(74) Mandataire: **Colas, Jean-Pierre et al**
**Cabinet de Boisse 37, avenue Franklin D. Roosevelt**
**F-75008 Paris (FR)**

EP 0 208 726 B1

**Description**

L'invention concerne les nacelles destinées à contenir les moteurs d'avions et plus particulièrement les moteurs d'avions de transport, nacelles qui comportent des parties démontables constituant ce que l'on appelle en général le capot.

Ce capot doit être construit de manière à assurer la continuité de forme de la nacelle, à résister aux efforts aérodynamiques, à être insensible aux divers fluides provenant du moteur et—en cas d'incendie du moteur—à contenir le feu avant déclenchement des extincteurs. Sur ce dernier point la norme FAR 25 impose une tenue du capot pendant 15 minutes dans une flamme à 1100°C.

Jusqu'à présent cette condition ne pouvait être satisfaite que par des métaux résistant aux hautes températures comme les aciers inoxydables ou le titane, tandis que les alliages légers ou les matériaux composites comportant une résine époxy ne conviennent qu'avec l'adjonction de protecteurs en matériaux réfractaires ou de peintures intumescentes, le résultat final étant des capots lourds et chers.

On connaît, par EP—A—0038746 des structures composites destinées principalement à l'absorption d'énergie sonore dans les nacelles d'aéronefs, et qui comprennent une couche poreuse formée en imprégnant des fibres de carbone, formant un tissu, avec une résine thermodurcissable qui est ensuite polymérisée.

On connaît aussi, par EP—A—0075033 des structures composites comprenant une âme en nid d'abeilles et deux feuilles de revêtement semblables, formées de fibres de carbone imprégnées d'une résine synthétique polymérisée, fixées chacune sur une face du nid d'abeilles.

Le but de la présente invention est de fournir un capot qui présente les avantages de légèreté et de faible prix des structures qu'on vient de citer, et qui, tout en étant étanche, présente une bonne résistance au feu, et en particulier, n'éclate pas sous l'effet de la brusque élévation de température provoquée par l'incendie.

Pour obtenir ce résultat, l'invention fournit un capot de moteur formé de panneaux sandwichs comprenant:

un nid d'abeilles

une couche étanche, de fibres de carbone imprégnées par une résine phénolique polymérisée, fixée sur une face du nid d'abeilles, et formant un revêtement extérieur du capot,

une couche poreuse, à pores ouverts, comprenant des fibres de carbone imprégnées par une résine phénolique polymérisée cette couche étant fixée sur la face opposée du nid d'abeilles et formant un revêtement interieur du capot.

L'invention fournit également un procédé d'obtention d'un capot de moteur, ce procédé comportant les étapes suivantes:

a) préparation d'une couche de fibres de carbone,

b) imprégnation de celle-ci avec la résine phénolique non polymérisée,

c) cuisson d'abord sous vide puis sous une pression assez forte pour fermer les pores de la couche imprégnée et faire en sorte que le gaz résiduel reste dans ladite couche imprégnée à l'état de fines bulles incluses,

d) préparation d'une couche de fibres de carbone,

e) imprégnation de celle-ci avec la résine phénolique non polymérisée,

f) cuisson en autoclave, sans recours au vide, pour obtenir que les pores de la couche imprégnée restent ouverts,

g) fixation de la couche obtenue à la fin de l'étape c) sur une face d'une âme en nid d'abeilles, pour constituer le revêtement extérieur du capot,

h) fixation de la couche obtenue à la fin de l'étape f) sur la face opposée de ladite âme en nid d'abeilles, pour constituer le revêtement intérieur du capot.

De préférence les fibres de carbone sont mises en oeuvre sous formes de tissus pour constituer les revêtements, les tissus permettant d'obtenir en cas de feu une tenue du revêtement meilleure que celle des fibres non tissées qui sont arrachées.

Comme résine phénolique pour l'imprégnation de tels tissus, on peut citer la résine que l'on trouve dans le commerce sous la marque "Brochier 200" qui est presque totalement insensible au feu.

Pour réunir les revêtements et le nid d'abeilles intermédiaire, il est avantageux d'utiliser une colle époxy que l'on déposera sous forme de film sur les revêtements avant l'assemblage avec le nid d'abeilles.

La résine phénolique utilisée pour l'imprégnation du tissu de carbone constituant la base de chacun des revêtements dégage des gaz pendant sa polymérisation à chaud.

C'est pour cette raison que le revêtement externe est cuit en autoclave d'abord sous vide afin d'éliminer le plus possible les gaz dégagés, puis dans la phase finale de la cuisson, soumis à une forte pression afin de fermer les pores, de sorte que le gaz résiduel reste dans le revêtement à l'état de fines bulles incluses.

Pour le revêtement interne, la polymérisation se fait aussi par cuisson en autoclave mais sans recours au vide de sorte que les pores restent ouverts. Cette porosité du revêtement interne évite son éclatement sous l'effet de la brusque augmentation de température provoquée par l'incendie.

Il est avantageux de terminer la fabrication du revêtement interne par adjonction d'une couche de métal à bas point de fusion, projetée sur la face de ce revêtement tourné vers l'intérieur du capot et d'une couche de peinture cellulosique afin que ce revêtement soit étanche aux fluides, en fonctionnement normal, mais redevienne poreux en cas d'incendie par disparition de la peinture et fusion immédiate de la couche métallique.

A titre de métal convenable on peut citer l'étain qui fond à 230°C.

La couche de métal projetée permet aussi de protéger le capot et les instruments liés au moteur contre les effets de la foudre. Elle est connectée électriquement à la masse par les ferrures de fixation.

La figure 1 du dessin annexé donné à titre d'exemple montre schématiquement en perspective une nacelle motrice avec son capot.

La figure 2 montre à plus grande échelle une coupe transversale partielle du capot.

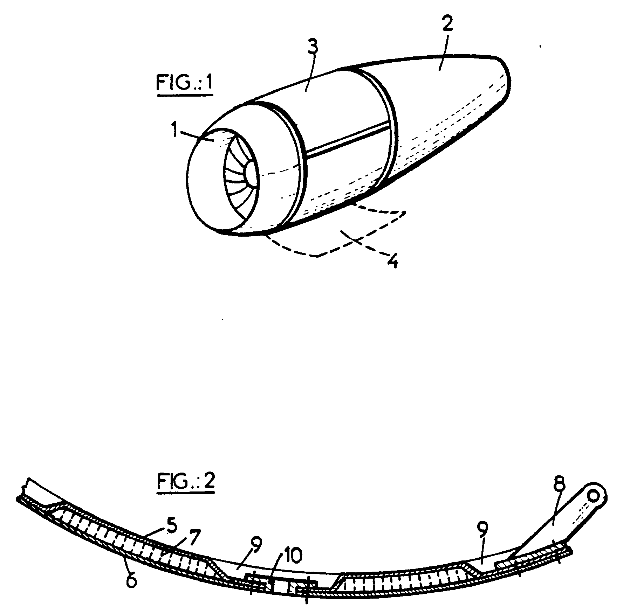

Sur la figure 1 on voit une nacelle de forme fuselée avec son ouverture d'entrée d'air 1 pour l'alimentation du moteur contenu et sa partie arrière enveloppant la tuyère d'éjection des gaz. En 3 se trouve le capot qui recouvre le moteur et qui est amovible pour permettre la visite des organes de ce moteur. Ce capot, de forme générale cylindrique, comprend comme d'habitude des parties articulées entre elles dont l'une 4 a été figurée en position d'ouverture par des pointillés.

Sur la figure 2 on voit en coupe transversale une partie du capot comprenant le revêtement interne 5 et le revêtement externe 6 assemblés entre eux par le nid d'abeilles 7.

Deux ou trois éléments de ce genre, en forme de portion de cylindre dont les génératrices sont perpendiculaires au plan de la figure 2, sont assemblés entre eux pour former le cylindre complet entourant le moteur, l'assemblage se faisant par des ferrures telles que 8. Les éléments comportent des empochements ou cavités telles que 9 dans lesquelles le nid d'abeilles est supprimé et les deux revêtements collés l'un sur l'autre ne forment qu'une seule épaisseur. Dans ces empochements viennent se fixer les ferrures d'attaches 8, articulations, pièces à orifice 10 pour l'entrée et la sortie d'air des capots etc.

## Revendications

1. Capot de moteur formé de panneaux sandwichs comprenant:

un nid d'abeilles (7),

une couche étanche (6), de fibres de carbone imprégnées par une résine phénolique polymérisée, fixée sur une face du nid d'abeilles, et formant un revêtement extérieur du capot,

une couche (5) poreuse, à pores ouverts, comprenant des fibres de carbone imprégnées par une résine phénolique polymérisée, cette couche étant fixée sur la face opposée du nid d'abeilles et formant un revêtement interieur du capot.

2. Capot selon la revendication 1, caractérisé en ce que le revêtement intérieur comprend, outre ladite couche de fibres imprégnées, une couche de métal à base point de fusion, disposée sur la face de ladite couche de fibres qui est tournée vers l'intérieur du capot.

3. Capot selon la revendication 2, caractérisé en ce que ledit métal à bas point de fusion est l'étain.

4. Capot selon l'une des revendications 1 à 3, caractérisé en ce que le nid d'abeilles est en fibres de verre imprégnées de résine phénolique.

5. Procédé d'obtention d'un capot de moteur, ce procédé comportant les étapes suivantes:

a) préparation d'une couche de fibres de carbone,

b) imprégnation de celle-ci avec la résine phénolique non polymérisée,

c) cuisson d'abord sous vide puis sous une pression assez forte pour fermer les pores de la couche imprégnée et faire en sorte que le gaz résiduel reste dans la dite couche imprégnée à l'état de fines bulles incluses,

d) préparation d'une couche de fibres de carbone,

e) imprégnation de celle-ci avec la résine phénolique non polymérisée,

f) cuisson en autoclave, sans recours au vide, pour obtenir que les pores de la couche imprégnée restent ouverts,

g) fixation de la couche obtenue à la fin de l'étape c) sur une face d'une âme en nid d'abeilles, pour constituer le revêtement extérieur du capot,

h) fixation de la couche obtenue à la fin de l'étape f) sur la face opposée de ladite âme en nid d'abeilles, pour constituer le revêtement intérieur du capot.

6. Procédé selon la revendication 5, caractérisé en ce que les fibres de carbone sont mises en oeuvre sous forme de tissus aux étapes a) et d).

7. Procédé selon l'une des revendications 5 ou 6, caractérisé en ce que pour fixer les revêtements sur le nid d'abeilles, on utilise une colle époxy qu'on dépose sous forme de film sur les revêtements avant l'assemblage.

8. Procédé selon l'une des revendications 5 à 7, caractérisé en ce qu'il comprend une étape supplémentaire, de dépôt, sur la face de la couche obtenue à l'étape f) qui est destinée à être tournée vers l'intérieur du capot, d'une couche de métal à bas point de fusion tel que l'étain.

## Patentansprüche

1. Aus Verbundplatten gebildete Triebwerkshaube, bestehend aus:

einer Wabenstruktur (7),

einer dichten Schicht (6) aus mit polymerisiertem Phenolharz imprägnierten Kohlenstoff-Fasern, die auf einer Seite der Wabenstruktur angebracht ist und eine äußere Haubenverkleidung bildet, und

einer porösen, offenporigen Schicht (5), welche mit polymerisiertem Phenolharz imprägnierte Kohlenstoff-Fasern aufweist, welche auf der gegenüberliegenden Seite der Wabenstruktur angebracht ist und welche eine innere Haubenverkleidung bildet.

2. Haube nach Anspruch 1, dadurch gekennzeichnet, daß die innere Verkleidung zusätzlich zu der Schicht aus imprägnierten Fasern eine Schicht aus niedrigschmelzendem Metall aufweist, die auf der dem Haubeninneren zugekehrten Seite der Faserschicht angeordnet ist.

3. Haube nach Anspruch 2, dadurch gekennzeichnet, daß das niedrigschmelzende Metall Zinn ist.

4. Haube nach einem der Ansprüche 1 bis 3, dadurch gekennzeichnet, daß die Wabenstruktur aus mit Phenolharz imprägnierten Glasfasern besteht.

5. Verfahren zum Erzeugen einer Triebwerkshaube, bestehend aus folgenden Schritten:

a) Herstellen einer Schicht aus Kohlenstoff-Fasern,

b) deren Imprägnierung mit nichtpolymerisiertem Phenolharz,

c) Warmhärten der imprägnierten Schicht zuerst bei Unterdruck und anschließend bei genügend hohem Druck, um die Poren zu schließen, und zwar derart, daß Restgas in Form feiner geschlossener Bläschen in der imprägnierten Schicht verbleibt,

d) Herstellen einer Schicht aus Kohlenstoff-Fasern,

e) deren Imprägnierung mit nichtpolymerisiertem Phenolharz,

f) Warmhärten im Kessel ohne Unterdruck, um zu erzielen, daß die Poren dieser imprägnierten Schicht offenbleiben,

g) Befestigen der am Ende von Schritt c) erhaltenen Schicht an einer Seite eines Wabenstruktur-Kerns zur Bildung der Außenhaut bzw. -verkleidung der Haube, und

h) Befestigen der am Ende von Schritt f) erhaltenen Schicht an der gegenüberliegenden Seite des Wabenstruktur-Kerns zur Bildung der Innenhaut bzw. -verkleidung der Haube.

6. Verfahren nach Anspruch 5, dadurch gekennzeichnet, daß die Kohlenstoff-Fasern in den Schritten a) und d) in Form von Geweben eingesetzt werden.

7. Verfahren nach Anspruch 5 oder 6, dadurch gekennzeichnet, daß zum Befestigen der Verkleidungen auf der Wabenstruktur ein Epoxidharz-Kleber verwendet wird, den man vor der Montage der Wabenstruktur dünnschichtig auf die Verkleidungen aufträgt.

8. Verfahren nach einem der Ansprüche 5 bis 7, dadurch gekennzeichnet, daß als zusätzlicher Schritt auf der gemäß Schritt f) erhaltenen Schicht an der dem Haubeninneren zugekehrten Seite eine Schicht aus niedrigschmelzendem Metall, z.B. Zinn, angebracht wird.

**Claims**

1. Engine cowling made of laminated panels, comprising:

a honeycomb member (7),

a sealed layer (6) of carbon fibres impregnated with a polymerised phenolic resin, fixed to one side of the honeycomb member, and forming an outer covering for the cowling,

a porous, open-pored layer (5) comprising carbon fibres impregnated with a polymerised phenolic resin, this layer being fixed to the opposite side of the honeycomb member and forming an inner covering for the cowling.

2. Cowling according to claim 1, characterised in that the inner covering comprises, apart from said layer of impregnated fibres, a layer of metal with a low melting point, arranged on the side of said layer of fibres which faces the inside of the cowling.

3. Cowling according to claim 2, characterised in that the metal with a low melting point is tin.

4. Cowling according to one of claims 1 to 3, characterised in that the honeycomb member consists of glass fibres impregnated with phenolic resin.

5. Process for producing an engine cowling, comprising the following steps:

a) preparation of a layer of carbon fibres,

b) impregnation thereof with the unpolymerised phenolic resin,

c) baking, first *in vacuo* and then under a sufficiently high pressure to close the pores of the impregnated layer and ensure that the residual gas remains in the impregnated layer in the form of fine bubbles sealed therein,

d) preparation of a layer of carbon fibres,

e) impregnation thereof with the unpolymerised phenolic resin,

f) baking in an autoclave, without the use of a vacuum, to ensure that the pores of the impregnated layer stay open,

g) fixing of the layer obtained at the end of step c) to one side of a honeycomb-shaped core, to form the outer covering of the cowling,

h) fixing of the layer obtained at the end of step f) to the opposite side of said honeycomb-shaped core, to form the inner covering of the cowling.

6. Process according to claim 5, characterised in that the carbon fibres are used in the form of woven material in steps a) and d).

7. Process according to claim 5 or 6, characterised in that, to fix the coverings to the honeycomb member, an epoxy resin is used, which is applied to the coverings in a film before assembly.

8. Process according to any of claims 5 to 7, characterised in that it comprises an additional step of depositing a layer of metal with a low melting point, such as tin, on the side of the layer obtained in step f) which is intended to face the inside of the cowling.

FIG.:1

FIG.:2